(19) Europäisches Patentamt
European Patent Office
Office européen des brevets

(11) **EP 3 049 262 B1**

(12) **FASCICULE DE BREVET EUROPEEN**

(45) Date de publication et mention
de la délivrance du brevet:
**02.05.2018 Bulletin 2018/18**

(21) Numéro de dépôt: **14790185.4**

(22) Date de dépôt: **06.08.2014**

(51) Int Cl.:
*B60G 11/14* (2006.01)    *B60G 7/04* (2006.01)
*B60G 11/32* (2006.01)

(86) Numéro de dépôt international:
**PCT/FR2014/052053**

(87) Numéro de publication internationale:
**WO 2015/040297 (26.03.2015 Gazette 2015/12)**

(54) **DISPOSITIF DE SUSPENSION COMPORTANT DES BUTEES CYLINDRIQUES**

AUFHÄNGUNGSVORRICHTUNG MIT ZYLINDRISCHEN ANSCHLAGPUFFERN

SUSPENSION DEVICE WITH CYLINDRICAL BUMPSTOPS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.09.2013 FR 1359105**

(43) Date de publication de la demande:
**03.08.2016 Bulletin 2016/31**

(73) Titulaire: **PSA Automobiles SA
78300 Poissy (FR)**

(72) Inventeurs:
• **ALLEGRE, Jean Marc
F-91470 Limours (FR)**
• **MONTEIL, Christophe
F-60530 Le Mesnil En Thelle (FR)**

(74) Mandataire: **Rosenberg, Muriel Sylvie
PSA Automobiles SA
VPIB - LG081
18 rue des Fauvelles
92250 La Garenne Colombes (FR)**

(56) Documents cités:
**EP-A1- 0 520 928    EP-A1- 0 888 910
DE-A1- 4 307 445    DE-A1-102008 018 336
DE-C2- 3 714 363    US-A- 2 160 541
US-A- 2 902 274    US-A- 3 559 976
US-A- 3 984 119    US-A1- 2011 291 338**

## Description

La présente invention se rapporte à dispositif de suspension comportant des butées cylindriques.

L'invention appartient au domaine des suspensions pour véhicules automobiles.

Les dispositifs de suspension pour véhicule automobile connus comprennent un ressort hélicoïdal maintenu entre un appui supérieur et un appui inférieur respectivement liés aux parties supérieure et inférieure du dispositif de suspension.

Le ressort permet de porter la charge du véhicule et assure également le confort vertical du véhicule en filtrant les inégalités de la route.

Le débattement du ressort est généralement limité par son encombrement ainsi que par la longueur minimale, ou course morte, du ressort lorsqu'il est totalement comprimé. Cette longueur minimale du ressort totalement comprimé correspond généralement à une position dans laquelle les spires du ressort sont quasiment jointives sans être en contact les unes avec les autres, pour éviter la dégradation du ressort.

Des butées en élastomère sont habituellement disposées dans le dispositif de suspension pour modifier la loi d'amortissement et limiter le débattement du dispositif en détente lorsque le ressort est détendu, ou en attaque lorsque le ressort est comprimé.

On connaît du document FR-A-2 923 183 un dispositif de suspension de véhicule automobile comportant un ressort hélicoïdal dont certaines spires ont un diamètre plus faible. Ceci permet l'imbrication des spires de plus faibles diamètre dans des spires de plus grand diamètre lors de la compression du ressort. Cette caractéristique permet de réduire l'encombrement du ressort en augmentant son débattement.

Un tel dispositif présente plusieurs inconvénients.

Le diamètre des spires du ressort étant variable, la conception et la réalisation du ressort, sont complexes et coûteuses et cela rend difficile l'intégration d'une fonction de limitation de débattement en butée de détente.

Du reste, un tel ressort n'est pas protégé des projections extérieures qui peuvent endommager la peinture du ressort, avec des risques d'oxydation et finalement de rupture.

L'invention a pour but de remédier aux inconvénients de l'art antérieur.

Dans ce but, la présente invention propose un dispositif de suspension d'un véhicule automobile comprenant un appui inférieur, un appui supérieur et un premier ressort hélicoïdal comportant une spire supérieure et une spire inférieure, positionné entre cet appui inférieur et cet appui supérieur, le dispositif étant remarquable en ce qu'il comprend en outre :

- un second ressort hélicoïdal comportant une spire supérieure et une spire inférieure, positionné entre l'appui inférieur et l'appui supérieur ;

- une pièce de liaison en contact avec la spire inférieure du premier ressort et la spire supérieure du second ressort ;
- une première butée disposée autour du premier ressort ; et
- une seconde butée disposée autour du second ressort.

Ainsi l'invention permet de limiter le débattement des ressorts tout en maintenant un encombrement réduit.

Selon une caractéristique particulière, les première et seconde butées sont des cylindres dont une partie de la surface est conformée en soufflet.

Ainsi l'invention permet de protéger les ressorts de projections extérieures et de faire varier la longueur des butées.

Selon une caractéristique particulière, la première butée est liée d'une part, à l'appui supérieur mentionné plus haut et d'autre part, à la pièce de liaison.

Selon une caractéristique particulière, la seconde butée est liée d'une part, à l'appui inférieur mentionné plus haut et d'autre part, à la pièce de liaison.

Selon une caractéristique particulière, les première et seconde butées sont réalisées dans un matériau thermoplastique.

Selon une caractéristique particulière, les premier et second ressorts sont au moins partiellement insérés l'un dans l'autre.

Ainsi, un ressort étant au moins partiellement inséré dans l'autre, le volume occupé par le dispositif est d'autant plus réduit.

Selon une caractéristique particulière, le premier ressort et le second ressort sont concentriques.

Selon une caractéristique particulière, la spire inférieure du premier ressort est disposée plus bas que la spire supérieure du second ressort.

Selon une caractéristique particulière, la pièce de liaison est composée d'un élément cylindrique dont une extrémité est recourbée vers l'intérieur et dont l'autre l'extrémité est recourbée vers l'extérieur de cet élément.

Dans le même but, l'invention a aussi pour objet un véhicule automobile comportant au moins un dispositif de suspension tel que brièvement décrit plus haut.

L'invention sera mieux comprise et d'autres aspects et avantages apparaîtront plus clairement à la lecture de la description qui suit d'un mode particulier de réalisation, donné à titre d'exemple nullement limitatif et en référence aux dessins qui l'accompagnent, dans lesquels :

- la figure 1 est une vue en coupe d'un mode particulier de réalisation d'un dispositif de suspension selon l'invention ;
- la figure 2 est une vue en coupe de ce même dispositif de suspension sur laquelle les ressorts ne sont pas représentés ;
- la figure 3 est une vue en coupe de ce dispositif de suspension en position comprimée ; et

- la figure 4 est une vue en coupe de ce dispositif de suspension en position détendue.

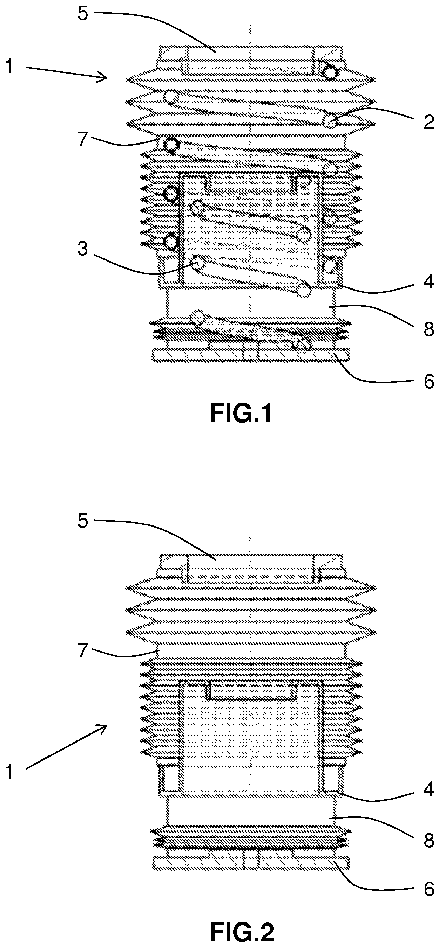

La figure 1 illustre un dispositif de suspension 1 conforme à l'invention dans un mode particulier de réalisation. Le dispositif de suspension 1 comporte un premier ressort hélicoïdal 2, un second ressort hélicoïdal 3, une pièce de liaison 4, un appui supérieur 5, un appui inférieur 6, une butée supérieure 7 et une butée inférieure 8.

Le premier ressort 2 et le second ressort 3 comportent chacun une spire supérieure et une spire inférieure. Les premier et second ressorts 2 et 3 sont positionnés entre l'appui inférieur 6 et l'appui supérieur 5.

Par exemple, le premier ressort 2 et le second ressort 3 ont un diamètre de spire constant.

Le premier ressort 2 et le second ressort 3 sont au moins partiellement insérés l'un dans l'autre. La spire inférieure du premier ressort 2 est alors disposée plus bas que la spire supérieure du second ressort 3.

Sur la figure 1, le premier ressort 2 a un diamètre de spire plus grand que le second ressort 3 ; le second ressort 3 se trouve ainsi au moins partiellement inséré dans le premier ressort 2. Néanmoins, on peut tout aussi bien prévoir la configuration inverse.

Le premier ressort 2 et le second ressort 3 peuvent par exemple être concentriques, comme représenté sur la figure 1.

La spire supérieure du premier ressort 2 est en contact avec l'appui supérieur 5 et sa spire inférieure est en contact avec la pièce de liaison 4.

La spire inférieure du second ressort 3 est en contact avec l'appui inférieur 6 et sa spire supérieure est en contact avec la pièce de liaison 4.

La pièce de liaison 4 est donc disposée entre le premier ressort 2 et le second ressort 3, en contact avec la spire inférieure du premier ressort 2 et la spire supérieure du second ressort 3.

Avantageusement, la pièce de liaison 4 est composée d'un élément cylindrique dont une extrémité est recourbée vers l'intérieur et dont l'autre l'extrémité est recourbée vers l'extérieur de cet élément.

Ainsi, une extrémité du ressort de plus grand diamètre, correspondant au premier ressort 2 dans le mode de réalisation représenté par la figure 1, se trouve en appui sur la partie de la pièce de liaison 4 recourbée vers l'extérieur.

A l'inverse, le ressort de plus faible diamètre, correspondant au second ressort 3 dans le mode de réalisation représenté par la figure 1, se trouve en appui sur la partie de la pièce de liaison 4 recourbée vers l'intérieur.

Le premier ressort 2 a une raideur K1 et le second ressort 3 a une raideur K2.

Les raideurs K1 et K2 peuvent avantageusement avoir des valeurs différentes, mais peuvent également être de valeurs identiques.

Le premier ressort 2 étant en série avec le second ressort 3, la raideur équivalente K' du dispositif de suspension 1 est donnée par l'équation suivante :

$$1 / K' = 1 / K1 + 1 / K2$$

Conformément à l'invention, une première butée 7 est disposée autour du premier ressort 2 et une seconde butée 8 est disposée autour du second ressort 3.

La première butée 7 est liée d'une part, à l'appui supérieur 5 et d'autre part, à la pièce de liaison 4. Par exemple, la partie supérieure de la première butée 7 est liée à l'appui supérieur 5 et sa partie inférieure est liée à la partie de la pièce de liaison 4 recourbée vers l'extérieur.

La seconde butée 8 est liée d'une part, à l'appui inférieur 6 et d'autre part, à la pièce de liaison 4. Par exemple, la partie inférieure de la seconde butée 8 est liée à l'appui inférieur 6 et sa partie inférieure est liée à la partie de la pièce de liaison 4 recourbée vers l'extérieur.

A titre d'exemple non limitatif, la première butée 7 et la seconde butée 8 peuvent être liées aux autres pièces du dispositif 1 par « clippage ». Par « clippage », on entend que les butées sont partiellement insérées dans des encoches réalisées dans les autres pièces (appuis 5 et 6, pièce de liaison 4). Des pièces de serrage, telles que des « clips », peuvent être utilisées pour verrouiller la fixation des butées sur ces autres pièces. En variante, le verrouillage de la fixation peut être réalisé par un quart de tour des butées lors de l'insertion dans les encoches.

Dans une variante non illustrée, les butées 7 et 8 peuvent former une pièce unique, dont la partie supérieure est liée à l'appui supérieur 5, dont la partie inférieure est liée à l'appui inférieur 6 et dont une partie intermédiaire est liée à la partie de la pièce de liaison 4 recourbée vers l'extérieur.

Les butées 7 et 8 délivrent un effort qui s'ajoute à l'effort des ressorts 2 et 3. L'épaisseur et la forme des butées peuvent être calculées afin de décrire la courbe d'effort souhaitée en fonction de leur compression ou de leur détente.

La première butée 7 et la seconde butée 8 se présentent sous la forme de cylindres dont une partie de la surface est conformée en soufflet. Ainsi, la longueur des butées 7 et 8 peut varier en fonction de l'extension ou de la compression des soufflets.

Les première et seconde butées 7 et 8 sont réalisées dans un matériau permettant de protéger les ressorts 2 et 3 de projections d'objets solides ou liquides extérieurs.

Par exemple, les butées 7 et 8 peuvent être réalisées dans un matériau thermoplastique, mais d'autres matériaux compatibles d'une utilisation dans un tel dispositif de suspension sont possibles.

Les figures 2 à 4 sont des vues en coupe de ce même dispositif de suspension 1 sur lesquelles les premier et second ressorts 2 et 3 ne sont pas représentés. Ces vues permettent de mieux comprendre le rôle des butées.

Sur la figure 2, le dispositif de suspension 1 est dans une position, dite de référence, dans laquelle les butées 7 et 8 sont partiellement comprimées.

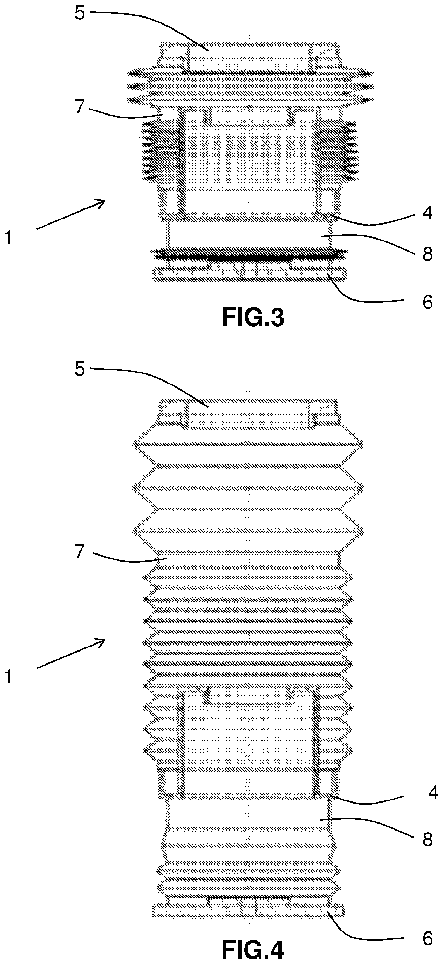

Sur la figure 3, le dispositif de suspension 1 est dans une position, dite comprimée, dans laquelle les butées 7 et 8 sont davantage comprimées que sur la figure 2. La compression des butées 7 et 8 au niveau des soufflets génère un effort qui s'oppose à la compression du dispositif 1. Les butées 7 et 8 ont alors un rôle de butées d'attaque.

Sur la figure 4, le dispositif de suspension 1 est dans une position, dite détendue, dans laquelle les première et seconde butées 7 et 8 sont plus détendues que sur la figure 2. Les butées fonctionnent alors comme un câble élastique étiré qui génère un effort s'opposant à l'extension du dispositif 1. Les butées 7 et 8 ont alors un rôle de butées de détente.

Le dispositif de suspension 1 peut être installé dans une suspension automobile de type pseudo MacPherson. La partie supérieure de la suspension peut alors, à titre d'exemple non limitatif, être liée à la caisse d'un véhicule et sa partie inférieure à la fusée d'une roue de ce véhicule.

L'appui supérieur 5 est alors lié à la partie supérieure de la suspension et l'appui inférieur 6 est lié à la partie inférieure de la suspension.

Le dispositif de suspension 1 selon l'invention peut également être installé sur un essieu arrière à traverse déformable.

Le dispositif 1 permet alors de disposer de butées de détente longues, ce qui est habituellement impossible pour des suspensions situées à l'arrière d'un véhicule, du fait du faible volume disponible.

Ainsi, un dispositif de suspension conforme à l'invention ou un véhicule comportant au moins un dispositif de suspension conforme à l'invention, présente une fonction de limitation de débattement en butée de détente ou d'attaque et permet de protéger efficacement les ressorts du dispositif vis-à-vis de projections extérieures. En outre, un tel dispositif est conçu et réalisé de façon économique avec un débattement maximisé dans un encombrement réduit.

**Revendications**

1. Dispositif de suspension (1) d'un véhicule automobile comprenant un appui inférieur (6), un appui supérieur (5) et un premier ressort hélicoïdal (2) comportant une spire supérieure et une spire inférieure, positionné entre ledit appui inférieur (6) et ledit appui supérieur (5), ledit dispositif (1) comprenant en outre :

- un second ressort hélicoïdal (3) comportant une spire supérieure et une spire inférieure, positionné entre ledit appui inférieur (6) et ledit appui supérieur (5) ;
- une pièce de liaison (4) en contact avec la spire inférieure dudit premier ressort (2) et la spire supérieure dudit second ressort (3) ;
- une première butée (7) disposée autour dudit premier ressort (2) ; et
- une seconde butée (8) disposée autour dudit second ressort (3) ;

ledit dispositif (1) étant **caractérisé en ce que** lesdites première et seconde butées (7, 8) sont des cylindres dont une partie de la surface est conformée en soufflet.

2. Dispositif de suspension selon la revendication 1, **caractérisé en ce que** ladite première butée (7) est liée d'une part, audit appui supérieur (5) et d'autre part, à ladite pièce de liaison (4).

3. Dispositif de suspension selon la revendication 1 ou 2, **caractérisé en ce que** ladite seconde butée (8) est liée d'une part, audit appui inférieur (6) et d'autre part, à ladite pièce de liaison (4).

4. Dispositif de suspension selon l'une quelconque des revendications précédentes, **caractérisé en ce que** lesdites première et seconde butées (7, 8) sont réalisées dans un matériau thermoplastique.

5. Dispositif de suspension selon l'une quelconque des revendications précédentes, **caractérisé en ce que** lesdits premier (2) et second (3) ressorts sont au moins partiellement insérés l'un dans l'autre.

6. Dispositif de suspension selon l'une quelconque des revendications précédentes, **caractérisé en ce que** ledit premier ressort (2) et ledit second ressort (3) sont concentriques.

7. Dispositif de suspension selon l'une quelconque des revendications précédentes, **caractérisé en ce que** la spire inférieure dudit premier ressort (2) est disposée plus bas que la spire supérieure dudit second ressort (3).

8. Dispositif de suspension selon l'une quelconque des revendications précédentes, **caractérisé en ce que** ladite pièce de liaison (4) est composée d'un élément cylindrique dont une extrémité est recourbée vers l'intérieur et dont l'autre l'extrémité est recourbée vers l'extérieur dudit élément.

9. Véhicule automobile **caractérisé en ce qu'**il comporte au moins un dispositif de suspension (1) selon l'une quelconque des revendications précédentes.

## Patentansprüche

1. Aufhängungsvorrichtung (1) eines Kraftfahrzeugs, die eine untere Auflage (6), eine obere Auflage (5) und eine erste Spiralfeder (2) umfasst, die eine obere und eine untere Windung umfasst, die zwischen der unteren Auflage (6) und der oberen Auflage (5) positioniert ist, wobei die Vorrichtung (1) außerdem Folgendes umfasst:

   - eine zweite Spiralfeder (3), die eine obere Windung und eine untere Windung umfasst, die zwischen der unteren Auflage (6) und der oberen Auflage (5) positioniert ist;
   - ein Verbindungsteil (4) in Berührung mit der unteren Windung der ersten Feder (2) und der oberen Windung der zweiten Feder (3);
   - einen ersten Anschlag (7), der um die erste Feder (2) angeordnet ist, und
   - einen zweiten Anschlag (8), der um die zweite Feder (3) angeordnet ist,

   Vorrichtung (1) **dadurch gekennzeichnet, dass** der erste und der zweite Anschlag (7, 8) Zylinder sind, von welchen ein Teil der Oberfläche als Balg ausgebildet ist.

2. Aufhängungsvorrichtung nach Anspruch 1, **dadurch gekennzeichnet, dass** der erste Anschlag (7) einerseits mit der oberen Auflage (5) und andererseits mit dem Verbindungsteil (4) verbunden ist.

3. Aufhängungsvorrichtung nach Anspruch 1 oder 2, **dadurch gekennzeichnet, dass** der zweite Anschlag (8) einerseits mit der unteren Auflage (6) und andererseits mit dem Verbindungsteil (4) verbunden ist.

4. Aufhängungsvorrichtung nach einem der vorhergehenden Ansprüche, **dadurch gekennzeichnet, dass** der erste und der zweite Anschlag (7, 8) aus einem Thermoplastmaterial hergestellt sind.

5. Aufhängungsvorrichtung nach einem der vorhergehenden Ansprüche, **dadurch gekennzeichnet, dass** die erste (2) und zweite (3) Feder mindestens teilweise ineinander eingesetzt sind.

6. Aufhängungsvorrichtung nach einem der vorhergehenden Ansprüche, **dadurch gekennzeichnet, dass** die erste Feder (2) und die zweite Feder (3) konzentrisch sind.

7. Aufhängungsvorrichtung nach einem der vorhergehenden Ansprüche, **dadurch gekennzeichnet, dass** die untere Windung der ersten Feder (2) niedriger angeordnet ist als die obere Windung der zweiten Feder (3).

8. Aufhängungsvorrichtung nach einem der vorhergehenden Ansprüche, **dadurch gekennzeichnet, dass** das Verbindungsteil (4) aus einem zylindrischen Element besteht, von dem ein Ende nach innen zurückgebogen ist, und von dem das andere Ende nach außerhalb des Elements zurückgebogen ist.

9. Kraftfahrzeug, **dadurch gekennzeichnet, dass** es mindestens eine Aufhängungsvorrichtung (1) nach einem der vorhergehenden Ansprüche umfasst.

## Claims

1. A suspension device (1) of a motor vehicle including a lower bearing (6), an upper bearing (5) and a first helical spring (2) comprising an upper turn and a lower turn, positioned between said lower bearing (6) and said upper bearing (5), said device (1) including in addition:

   - a second helical spring (3) comprising an upper turn and a lower turn, positioned between said lower bearing (6) and said upper bearing (5);
   - a linking piece (4) in contact with the lower turn of said first spring (2) and the upper turn of said second spring (3);
   - a first bumpstop (7) disposed around said first spring (2);
   and
   - a second bumpstop (8) disposed around said second spring (3);
   said device (1) being **characterized in that** said first and second bumpstops (7, 8) are cylinders, a portion of the surface of which is shaped in the manner of a bellows.

2. The suspension device according to Claim 1, **characterized in that** said first bumpstop (7) is linked, on the one hand, to said upper bearing (5) and, on the other hand, to said linking piece (4).

3. The suspension device according to Claim 1 or 2, **characterized in that** said second bumpstop (8) is linked, on the one hand, to said lower bearing (6) and, on the other hand, to said linking piece (4).

4. The suspension device according to any one of the preceding claims, **characterized in that** said first and second bumpstops (7, 8) are made from a thermoplastic material.

5. The suspension device according to any one of the preceding claims, **characterized in that** said first (2) and second (3) springs are at least partially inserted one into the other.

**6.** The suspension device according to any one of the preceding claims, **characterized in that** said first spring (2) and said second spring (3) are concentric.

**7.** The suspension device according to any one of the preceding claims, **characterized in that** the lower turn of said first spring (2) is disposed lower than the upper turn of said second spring (3).

**8.** The suspension device according to any one of the preceding claims, **characterized in that** said linking piece (4) is composed of a cylindrical element, one end of which is bent towards the interior and the other end of which is bent towards the exterior of said element.

**9.** A motor vehicle, **characterized in that** it comprises at least one suspension device (1) according to any one of the preceding claims.

**FIG.1**

**FIG.2**

FIG.3

FIG.4

**EP 3 049 262 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2923183 A